# EUROPEAN PATENT SPECIFICATION

(11) **EP 4 205 525 B1**
(45) Date of publication and mention of the grant of the patent: **12.08.2026**
(21) Application number: 23150188.3
(22) Date of filing: 03.01.2023
(51) Int. Cl.: A01C 3/00, C02F 1/52, C02F 103/20

(54) **SYSTEM FOR REDUCING THE FORMATION OF AMMONIA IN A MANURE SPACE, AND METHOD THEREFOR**
SYSTEM ZUR REDUZIERUNG DER AMMONIAKBILDUNG IN EINEM DUNGRAUM UND VERFAHREN DAFÜR
SYSTÈME DE RÉDUCTION DE LA FORMATION D'AMMONIAC DANS UN ESPACE À LISIER ET PROCÉDÉ ASSOCIÉ

(30) Priority: 04.01.2022 NL 2030422
(43) Date of publication of application: 05.07.2023
(73) Proprietor: Farmin B.V., 8401 CG Gorredijk (NL); A. Huisman Holding B.V., 8401 CZ Gorredijk (NL)
(72) Inventor: Huisman, Andries Johannes, 8401 CZ Gorredijk (NL)
(74) Representative: Arnold & Siedsma

(56) References cited:
- EP-A1- 2 674 412
- WO-A1-2021/160842
- US-A- 5 865 143
- US-A- 5 890 454
- US-A1- 2012 006 746

## Description

The present invention relates to a system for reducing the formation of ammonia in a manure space. The invention further relates to a method for reducing the formation of ammonia in a manure space.

Livestock produces manure and urine, which is usually collected in a manure space, for instance a pit. Ammonia may be formed in the manure and urine. The ammonia can escape directly from the manure space or while the manure is being spread onto the land, and end up in the environment. The nitrogen which finds its way into the environment in this way has adverse effects on the environment.

It is known to reduce the ammonia emission from a manure space or during spreading of the manure by adding magnesium to the manure. By adding the magnesium struvite is formed in the manure. A drawback of adding magnesium to the manure space is that a user must themselves determine the quantity of magnesium to be added. This increases the chances of an incorrect quantity of magnesium being added to the manure space. This may result in the formation of ammonia being counteracted to insufficient extent.

WO 2021/160842 A1 relates to a method for reducing emission of ammonia from a livestock housing. The method comprises applying a composition comprising a compound that restrains ammonia volatilization onto freshly excreted manure by an animal in the livestock housing.

EP 2 674 412 A1 relates to a device for applying a determined quantity of a manure treating substance to manure, comprising a container for containing the substance, a conduit, a distributing means connected to the conduit for the purpose of distributed application of the substance over the manure, a dosing device for dosing the determined quantity of the substance, and pump means for pumping the determined quantity of the substance out of the container and for applying the determined quantity of the substance via the distributing means.

The present invention has for its object to obviate or at least reduce the above stated problems. It can be a particular object of the invention to provide a system which reduces the ammonia formation in a manure space in effective manner.

This object is achieved with a system according to claim 1.

Addition information of the liquid can be measured and monitored by the monitoring system. By measuring and monitoring the addition information it is possible to determine very precisely how much liquid has been added to the manure present in the manure space. This prevents the addition of too much or too little magnesium, this preventing inefficient use of magnesium or a less efficient reduction in the quantity of ammonia. On the basis of the ratio of magnesium salt in the liquid it is possible to determine how much magnesium has been added to the manure in the manure space.

A further advantage is that the quantity of magnesium added to the manure in the manure space can be safeguarded by the monitoring system. This reduces the chances of an incorrect quantity of magnesium being intentionally or unintentionally added to the manure in the manure space.

The addition information can for instance comprise the duration in open state, the quantity of added liquid and/or the time that the liquid was added.

Monitoring the quantity of liquid added simplifies recording of the quantity of liquid, and thereby recording of the quantity of added magnesium salt and/or magnesium. Hereby, a record of the added substances can be kept in simple manner and, if desired, it is possible to determine the realized magnitude of the reduction in ammonia and/or nitrogen. The determination of the reduction in ammonia and/or nitrogen can be used to demonstrate to government bodies that determined legislation is being complied with. With the determination of the reduction in ammonia and/or nitrogen the positive effects on the environment can further be demonstrated.

The one or more outlets are controlled by the central controller to go from a closed to an open state and vice versa. The outlet can for instance be provided with a valve in order to realize an open and closed state. In the closed state of the outlet no liquid flows through the outlet to the manure space. In the open state liquid is able to flow through the outlet of the manure space. In the present application open state must also be understood to mean a semi-open or other partially opened state, wherein a liquid flows periodically through the outlet to the manure space.

In use the system can comprise a plurality of outlets, wherein each of the outlets is preferably arranged in a manure space. A manure space is for instance understood to mean a manure pit under an animal accommodation or a stand-alone manure silo. It will be apparent to the skilled person that any space which is suitable for storing manure is included under the term manure space.

In an embodiment according to the invention the magnesium salt comprises magnesium chloride.

Experiments have shown that magnesium chloride is a suitable magnesium salt. It has particularly been found that magnesium chloride realizes a good struvite formation, whereby formation of ammonia in the manure is reduced in effective manner.

According to the invention the central controller comprises a communication module which is connectable to a remotely located server and is configured to send the addition information to the server.

By means of the communication module the central controller can send addition information to the server, so that the addition information is safely stored on the server. A further advantage is that other entities, such as a public body or a mobile device of a user of the system, can retrieve information from the remotely located server. This enables control and monitoring by for instance a public body. This additionally makes it possible to track and demonstrate the realized reduction in ammonia formation and/or nitrogen for the purpose of for instance an environmental report.

The communication module or the remotely located server is optionally connected in an operative state to an animal accommodation system in which the manure forecast, moment of spreading and the moment of mixing are for instance stored. The controller can hereby determine on the basis of the manure forecast, moment of spreading and the moment of mixing the quantity and the time of the liquid to be added. This enables a proactive system whereby the reduction can be optimized still further.

In an embodiment according to the invention the monitoring system comprises a flow rate meter arranged upstream of the outlet for the purpose of measuring liquid flowing out of the at least one outlet.

The flow rate meter is connected operatively to the central controller. With the flow rate meter it is determined at the outlet itself exactly how much liquid and, with this, how much magnesium is added to the manure space. This increases the certainty that the correct quantity of magnesium is added.

According to the invention the monitoring system comprises a content gauge arranged in the tank for the purpose of measuring a quantity of liquid present in the tank.

The content gauge can for instance be a distance meter which is arranged on an upper side of the tank and which measures the level of the liquid in the tank. The distance meter can for instance be a laser sensor or an ultrasonic sensor or another suitable meter. The content gauge is connected operatively to the central controller.

Owing to a measurement by the content gauge of the current quantity of liquid in the tank and the given measures of capacity of the tank, which can for instance be entered manually into the central controller, the central controller can calculate the quantity of available liquid, and thereby the quantity of magnesium salt and/or magnesium in the tank.

According to the invention the central controller is configured to:
- control the content gauge to perform a measurement at a predetermined interval;
- calculate a quantity of liquid located in the tank on the basis of the measurement by the content gauge; and
- send a supply signal to the server if the quantity of liquid in the tank is below a threshold value.

The central controller is configured to send a supply signal to the remotely located server when the quantity of liquid is below a predetermined threshold value, which server can then communicate to the supplying party that the system requires a new supply of liquid.

This enables active supply management by the system, whereby an order of the liquid is optionally put through automatically. The supply management optionally also takes into consideration the proactive information, if available, regarding manure forecast, moment of spreading and the moment of mixing and the like, as stated above. This improves the supply management further.

An advantage is that the chances of insufficient liquid being present in the tank are hereby reduced. This safeguards the reduction in the formation of ammonia.

In an advantageous embodiment according to the invention the monitoring system comprises a flow sensor arranged close to a mixer opening of the manure space for the purpose of measuring flow in the manure space.

The flow of the manure in the manure space can also be understood to mean the swirling or fluctuation of the manure. If the difference in level of the manure exceeds a threshold value within a predetermined interval, the central controller can determine that flow or swirling is taking place in the manure close to the mixer opening, and therefore that mixing is taking place at that moment. The central controller can thus for instance ascertain that flow or swirling is taking place in the manure at the moment that a difference in level of at least 10 centimetres is measured within 15 seconds by the flow sensor. It will be apparent to the skilled person that the predetermined interval and the threshold value depend on different parameters, such as the viscosity of the manure.

In an advantageous embodiment according to the invention the central controller is configured to change the at least one outlet from the closed state to the open state, at least partially on the basis of the measurement of flow in the manure space.

By changing the outlet from the closed to the open state during the mixing of the manure an automatic mixing of the liquid with the manure is obtained. This increases the chances of formation of struvite and thereby reduces the formation of ammonia.

In an embodiment according to the invention the monitoring system comprises a manure meter for measuring a difference in level of manure provided in the manure space.

The manure meter can for instance be a distance meter which is arranged on an upper side of the manure space and which measures the level of the liquid in the tank. The distance meter can for instance be a laser sensor or an ultrasonic sensor. The content gauge is connected operatively to the central controller.

With a measurement by the manure meter in combination with the measures of capacity of the manure space, which can for instance be entered manually into the central controller, the central controller can calculate the quantity of manure in the manure space.

In an advantageous embodiment according to the invention the central controller is configured to calculate at least partially on the basis of the measured height level of the manure a quantity of liquid to be added.

With a periodic or continuous measurement by the manure meter the central controller can calculate the increased quantity of manure or the quantity of manure removed from the manure space. In the event that a quantity of manure has been added, the central controller can then calculate the required quantity of liquid to be added to the manure for an optimal struvite formation. This is possible in part in that the ratio of magnesium salt in the liquid is known in the central controller.

In an embodiment according to the invention the system further comprises an ammonia sensor arranged close to or in the manure space for the purpose of measuring the amount of ammonia.

The ammonia sensor is preferably arranged close to the manure space. Measuring the amount of ammonia makes it possible to determine the extent to which the formation of ammonia in the manure is being counteracted. In a currently preferred embodiment the ammonia sensor is operatively connected to the monitoring system and/or central controller. It is thereby for instance possible to transmit the obtained measurement data to a remotely located server and/or an animal accommodation system.

In an advantageous embodiment according to the invention the conduit comprises a distribution box from which a plurality of sub-conduits extend, wherein each of the sub-conduits is provided with an outlet for selectively adding the liquid.

Owing to the sub-conduits, each of the outlets can be arranged in a separate manure space and/or sub-space for the purpose of an effective delivery of the liquid.

In an embodiment according to the invention a pump connected between the tank and the outlet is arranged.

The liquid can be pumped to the outlets in effective manner by the pump. This increases the flexibility for the location of the system relative to the manure space. This optionally also increases the accuracy of the measurement of the added liquid.

**In** an embodiment according to the invention the central controller is provided with a security system, wherein the security system sends a break-in signal to the server in the event of unauthorized access to the central controller.

The security system prevents undesired access by a person to the central controller. This prevents the information sent to the server by the central controller from being altered, this further increasing the safeguarding of the addition information. This safeguards the reliability of the diverse data. It is possible, if desired, to send such safeguarding information along to an external party, such as a public body, in order to demonstrate the reliability of the supplied data.

**In** an embodiment according to the invention the system further comprises a system server provided with a server controller and a memory, wherein the server controller is configured to receive addition information from the central controller and/or the server and to store the addition information in the memory of the system server.

The system server can be used both instead of the remotely located server and in combination with the remotely located server.

The invention further relates to an animal accommodation provided with a system according to any one of the above described embodiments.

The animal accommodation provides similar advantages and effects as described for the system.

The invention further relates to a method for reducing the formation of ammonia, comprising of:
- providing a system according to any one of the foregoing claims;
- changing the outlet from the closed state to the open state by means of the central controller; and
- adding the liquid comprising magnesium salt to the manure space; and
- monitoring addition information of the liquid.

The method has similar advantages and effects as described for the system and the animal accommodation.

**In** an advantageous embodiment according to the invention the magnesium salt comprises magnesium chloride.

**In** a further advantageous embodiment the method comprises the steps of:
- measuring a quantity of added liquid;
- storing the quantity of added liquid in the central controller and/or remotely located server, preferably further comprising of:
- recording a time of addition of the quantity of added liquid.

The quantity of magnesium salt and/or magnesium can be calculated from the quantity of added liquid. The added quantity of liquid can for instance be measured with a flow rate meter. Storing the quantity of added liquid safeguards that a determined quantity of liquid is stored. Recording the time of addition, preferably performed by the central controller, also makes it possible to demonstrate when the liquid was added.

In a further advantageous embodiment according to the invention the method comprises the steps of:
- the content gauge performing a measurement;
- calculating a quantity of liquid stored in the tank on the basis of the measurement by the content gauge; and
- the central controller and/or the server ordering liquid when it is determined that the quantity of liquid stored in the tank is below a threshold value.

The ordering of liquid can for instance comprise of sending a supply signal to a supplier of the liquid. The above stated steps to ensure that sufficient liquid is stored in the tank so that a reduction in the formation of ammonia can be realized at all times.

Further features, advantages and details of the invention are described on the basis of embodiments thereof, wherein reference is made to the accompanying drawings, in which:
- Figure 1 is a schematic representation of an animal accommodation provided with a system according to the invention; and
- Figure 2 is a schematic representation of a system according to the invention.

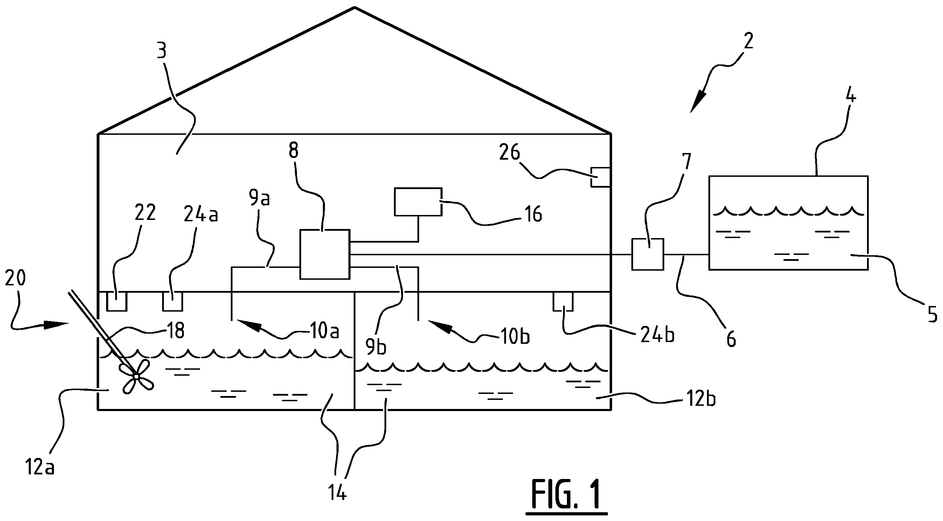

Animal accommodation 3 (figure 1) is provided with a system 2 for reducing ammonia in manure. System 2 comprises a tank 4 in which liquid 5 is stored. Dissolved in liquid 5 is a magnesium salt, in the shown embodiment magnesium chloride. Liquid 5 is carried through main conduit 6 to distribution box 8 by means of pump 7. In distribution box 8 liquid 5 is fed through to sub-conduits 9a and 9b. Sub-conduits 9a and 9b debouch in respective outlets 10a and 10b. Outlet 10a is arranged in first manure space 12a and outlet 10b is arranged in second manure space 12b. First manure space 12a and second manure space 12b together form the whole manure space. In the shown embodiment a quantity of manure 14 is present in manure space 12a and 12b. Manure is understood to mean the excreta of the animals living in animal accommodation 3, for instance excrement, urine and slurry.

Distribution box 8 is connected operatively to central controller 16. Central controller 16 controls distribution box 8 to distribute liquid 5 to outlets 10a and 10b. Further connected operatively to central controller 16 are level meters 24a and 24b, which are arranged in respective manure spaces 10a and 10b. Also connected operatively to central controller 16 is flow meter 22. Flow meter 22 is arranged close to mixer opening 20 of manure space 12a. Provided in mixer opening 20 in the shown embodiment is mixer 18 which can be coupled to the power take-off shaft of a tractor or other device, wherein the mixer is configured to mix the manure 14 in manure space 12a. Animal accommodation 3 further comprises ammonia sensor 26 which is configured to measure the quantity of ammonia present in the animal accommodation. Ammonia sensor 26 is also connected operatively to central controller 16.

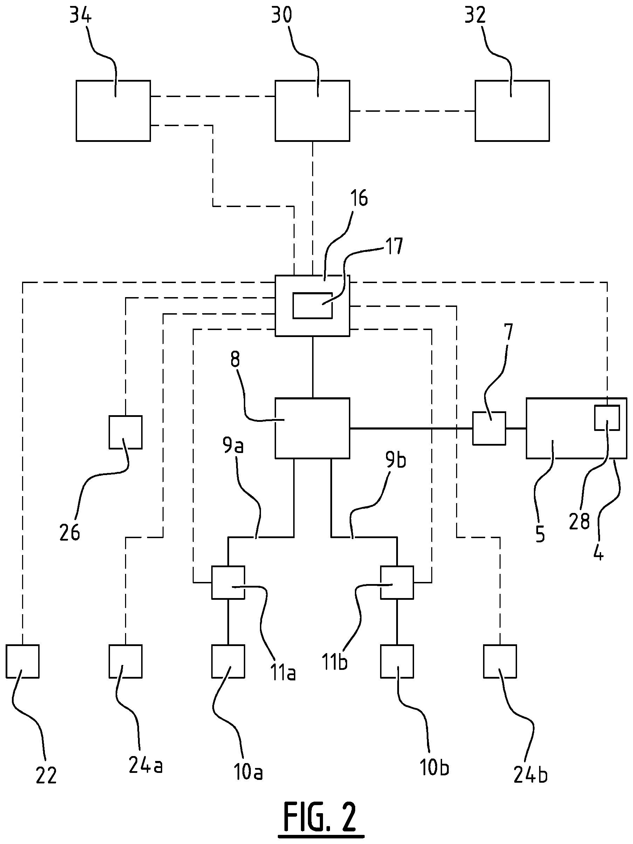

Central controller 16 (figure 2) is connected operatively to distribution box 8. Distribution box 8 is connected to outlets 10a and 10b by means of sub-conduits. Placed on the sub-conduits upstream of outlets 10a and 10b are respective flow rate meters 11a and 11b. Flow rate meters 11a and 11b measure the quantity of liquid flowing through outlet 10a and 10b into manure spaces 12a and 12b. Flow rate meters 11a and 11b are connected operatively to central controller 16. Level meters 24a and 24b are connected operatively to central controller 16. Level meters 24a and 24b are provided in or close to manure space 12a and 12b and are configured to measure the level of manure 14 in manure space 12a and 12b. Combined with the dimensions of manure space 12a and 12b, central controller 16 can calculate the quantity of manure 14 present in manure space 12a and 12b. By measuring the level of manure 14 at different times using a processor, central controller 16 can additionally calculate the difference in level, whereby the quantity of manure added or removed between the different points in time can then be calculated.

Flow meter 22 is connected operatively to central controller 16 and is provided close to or in mixer opening 20. Flow meter 22 measures the level of manure 14 close to mixer opening 20. The level of manure 14 close to the mixer opening 20 is then transmitted periodically or continuously to central controller 16. If the difference in level of manure 14 exceeds a threshold value within a predetermined interval, central controller 16 determines that flow or swirling is taking place in the manure close to mixer opening 20, and therefore that mixing is taking place at that moment. Central controller 16 can thus for instance ascertain that flow or swirling is taking place in the manure at the moment that a difference in level of at least 10 centimetres is measured within 15 seconds by flow sensor 22.

In the shown embodiment ammonia sensor 26 is also connected operatively to central controller 16. Ammonia sensor 26 is configured to measure the amount of ammonia present in animal accommodation 3. The amount of ammonia measured is transmitted continuously or periodically to central controller 16. The effects of adding the magnesium salt to the manure can hereby be measured in effective manner.

Further provided in tank 4 is content gauge 28. Content gauge 28 is connected operatively to central controller 16 and transmits the height of the level of liquid 5 to central controller 16 continuously or periodically. Combined with the dimensions of tank 4, central controller 16 can calculate the quantity of liquid 5 still stored in tank 4.

In the shown embodiment central controller 16 also comprises communication module 17. Communication module 17 is configured to communicate with remotely located server 30, preferably by means of a wireless connection, for instance a 4G connection. Central controller 16 can control communication module 17 to transmit the values measured by flow rate meters 11a and 11b, level meters 24a and 24b, flow meters 22, ammonia meter 26 and/or content gauge 28 to server 30. The measured values can be stored in server 30. Server 30 can be connected to an entity 32. Entity 32 can be a public body which can in this way read or otherwise gain access to the data stored in server 30 in order to check how much liquid and, with this, magnesium salt, has been added to manure 14. Entity 32 can alternatively or additionally be a mobile device of a farmer, who is thus able to read data from system 2.

Server 30 and central controller 16 can also be operatively connected to animal accommodation system 34. Animal accommodation system 34 can for instance comprise information about the desired spreading times of manure 14, for instance for a proactive system.

The operative connection between flow rate meters 11a and 11b, level meters 24a and 24b, flow meters 22, ammonia meter 26 and content gauge 28 and central controller 16 can be both a fixed connection, i.e. with a physical cable, and a wireless connection, for instance by means of a radio frequency signal, 4G signal and any other suitable wireless connection.

In an embodiment according to the invention central controller 16 receives a measurement from level meters 24a and 24b, from which central controller 16 calculates on the basis of the dimensions of manure space 12a and 12b and the difference in level that a determined quantity of manure has been added to manure space 12a and 12b. Central controller 16 then determines on the basis of the ratio of magnesium in liquid 5 the quantity of liquid 5 which must be added to manure space 14 in order to counteract the formation of ammonia in manure 14.

In the shown embodiment it is the case that, at the moment that flow sensor 22 measures a difference in level close to mixer opening 20, central controller 16 determines that mixing is taking place in manure space 12a. On the basis of the determination that mixing is taking place, central controller 16 controls pump 7 so that liquid 5 is carried from tank 4 through conduit 6 to distribution box 8. In distribution box 8 liquid 5 is distributed to outlets 10a and 10b. Flow rate meters 11a and 11b measure how much liquid is actually delivered to manure spaces 12a and 12b by means of outlets 10a and 10b. The measurements by flow rate meters 11a and 11b are transmitted to central controller 16. The measurements by flow rate meters 11a and 11b are sent to remotely located server 30 by communication module 17. This safeguards that the correct quantity of magnesium is added to manure 14. The added quantity of magnesium can then be read by a public body or a user.

The current ammonia level in animal accommodation 3 is alternatively or additionally determined by central controller 16 on the basis of a measurement by ammonia meter 26. Ammonia meter 26 can then measure an ammonia level in animal accommodation 3 continuously or periodically, whereby central controller 16 is able to determine the reduction in ammonia level. Alternatively or additionally, central controller 16 sends the measurements by ammonia meter 26 and/or the reduction in ammonia level to remotely located server 30 using communication module 17. An effective record of reductions is hereby realized. Central controller 16 and/or remotely located server 30 optionally send the measurements of ammonia meter 26 and/or the ascertained reduction in ammonia level to entity 32, for instance a (semi-)public body, for the purpose of reporting the ammonia level.

The present invention is by no means limited to the above described embodiments thereof. The rights sought are defined by the following claims, within the scope of which many modifications can be envisaged.

## Claims

1. System (2) for reducing the formation of ammonia in a manure space (12a, 12b), comprising:
- a tank (4) for storing a liquid (5) comprising a magnesium salt;
- a conduit (6) connected to the tank (4) and provided with at least one outlet (10a, 10b) for selectively adding the liquid (5) to the manure space (12a, 12b);
- a central controller (16) connected operatively to the conduit (6) and/or at least one outlet (10a, 10b), wherein the central controller (16) is configured to change the at least one outlet (10a, 10b) from a closed state to an open state and vice versa, wherein in the open state liquid (5) can be added to the manure space (12a, 12b) from the at least one outlet (10a, 10b); and
- a monitoring system connected operatively to the central controller (16) for the purpose of monitoring addition information of the liquid (5),
wherein the central controller (16) comprises a communication module (17) which is connectable to a remotely located server (30) and is configured to send the addition information to the server (30), wherein the monitoring system comprises a content gauge (28) arranged in the tank (4) for the purpose of measuring a quantity of liquid (5) present in the tank (4), wherein the central controller (16) is configured to:
- control the content gauge (28) to perform a measurement at a predetermined interval;
- calculate a quantity of liquid (5) located in the tank (4) on the basis of the measurement by the content gauge (28); and
send a supply signal to the server (30) if the quantity of liquid (5) in the tank (4) is below a threshold value.

2. System (2) according to claim 1, wherein the magnesium salt comprises magnesium chloride.

3. System (2) according to claim 1 or 2, wherein the monitoring system comprises a flow rate meter (11a, 11b) arranged upstream of the outlet (10a, 10b) for the purpose of measuring liquid (5) flowing out of the at least one outlet (10a, 10b).

4. System (2) according to any one of the foregoing claims, wherein the monitoring system comprises a flow sensor (22) arranged close to a mixer opening of the manure space (12a, 12b) for the purpose of measuring flow in the manure space (12a, 12b).

5. System (2) according to claim 4, wherein the central controller (16) is configured to change the at least one outlet (10a, 10b) from the closed state to the open state, at least partially on the basis of the measurement of flow in the manure space (12a, 12b).

6. System (2) according to any one of the foregoing claims, wherein the monitoring system comprises a manure meter (24a, 24b) for measuring a difference in level of manure provided in the manure space (12a, 12b), wherein the central controller (16) is preferably configured to calculate at least partially on the basis of the measured height level of the manure a quantity of liquid (5) to be added.

7. System (2) according to any one of the foregoing claims, further comprising an ammonia sensor (26) arranged close to or in the manure space (12a, 12b) for the purpose of measuring the amount of ammonia.

8. System (2) according to any one of the foregoing claims, wherein the conduit (6) comprises a distribution box (8) from which a plurality of sub-conduits (9a, 9b) extend, wherein each of the sub-conduits (9a, 9b) is provided with an outlet (10a, 10b) for selectively adding the liquid (5), and/or wherein a pump (7) connected between the tank (4) and the outlet (10a, 10b) is arranged, and/or wherein the central controller (16) is provided with a security system, wherein the security system sends a break-in signal to the server (30) in the event of unauthorized access to the central controller (16), and/or further comprising a system server (30) provided with a server controller and a memory, wherein the server (30) controller is configured to receive addition information from the central controller (16) and/or the server, and to store the addition information in the memory of the system server (30).

9. Animal accommodation (3) provided with a system (2) according to any one of the foregoing claims.

10. Method for reducing the formation of ammonia, comprising of:
- providing a system (2) according to any one of the claims 1-8;
- changing the outlet (10a, 10b) from the closed state to the open state by means of the central controller (16); and
- adding the liquid (5) comprising magnesium salt to the manure space (12a, 12b); and
- monitoring addition information of the liquid (5).

11. Method according to claim 10, wherein the magnesium salt comprises magnesium chloride.

12. Method according to claim 10 or 11, further comprising of:
- measuring a quantity of added liquid (5);
- storing the quantity of added liquid (5) in the central controller (16) and/or remotely located server (30), preferably further comprising of:
- recording a time of addition of the quantity of added liquid (5), and/or wherein the method further comprises of:
- a content gauge (28) performing a measurement;
- calculating a quantity of liquid (5) stored in the tank (4) on the basis of the measurement by the content gauge (28); and
- the central controller (16) and/or the server (30) ordering liquid (5) when it is determined that the quantity of liquid (5) stored in the tank (4) is below a threshold value.

## Patentansprüche

1. System (2) zum Verringern der Ammoniakbildung in einem Gülleraum (12a, 12b), umfassend:
- einen Tank (4) zum Lagern einer Flüssigkeit (5), umfassend ein Magnesiumsalz;
- eine Leitung (6), die mit dem Tank (4) verbunden ist und mit mindestens einem Auslass (10a, 10b) versehen ist, zum selektiven Zugeben der Flüssigkeit (5) zu dem Gülleraum (12a, 12b);
- eine zentrale Steuerung (16), die mit der Leitung (6) und/oder mindestens einem Auslass (10a, 10b) wirkverbunden ist, wobei die zentrale Steuerung (16) konfiguriert ist, um den mindestens einen Auslass (10a, 10b) von einem geschlossenen Zustand in einen offenen Zustand und umgekehrt zu ändern, wobei in dem offenen Zustand Flüssigkeit (5) zu dem Gülleraum (12a, 12b) von dem mindestens einen Auslass (10a, 10b) zugegeben werden kann; und
- ein Überwachungssystem, das mit der zentralen Steuerung (16) wirkverbunden ist, zum Zweck des Überwachens von Zugabeinformationen der Flüssigkeit (5),
wobei die zentrale Steuerung (16) ein Kommunikationsmodul (17) umfasst, das mit einem entfernt befindlichen Server (30) verbindbar ist und konfiguriert ist, um die Zugabeinformationen an den Server (30) zu senden, wobei das Überwachungssystem ein Inhaltsmessgerät (28) umfasst, das in dem Tank (4) angeordnet ist, zum Zweck eines Messens einer Menge an Flüssigkeit (5), die in dem Tank (4) vorhanden ist, wobei die zentrale Steuerung (16) konfiguriert ist zum:
- Steuern des Inhaltsmessgeräts (28), um eine Messung in einem vorbestimmten Intervall durchzuführen;
- Berechnen einer Menge an Flüssigkeit (5), die sich in dem Tank (4) befindet, auf der Basis der Messung durch das Inhaltsmessgerät (28); und
Senden eines Versorgungssignals an den Server (30), falls die Menge an Flüssigkeit (5) in dem Tank (4) unter einem Schwellenwert liegt.

2. System (2) nach Anspruch 1, wobei das Magnesiumsalz Magnesiumchlorid umfasst.

3. System (2) nach Anspruch 1 oder 2, wobei das Überwachungssystem einen Fließgeschwindigkeitsmesser (11a, 11b) umfasst, der stromaufwärts des Auslasses (10a, 10b) angeordnet ist, zum Zweck des Messens von Flüssigkeit (5), die aus dem mindestens einen Auslass (10a, 10b) herausfließt.

4. System (2) nach einem der vorstehenden Ansprüche, wobei das Überwachungssystem einen Flusssensor (22) umfasst, der nahe einer Mischeröffnung des Gülleraums (12a, 12b) angeordnet ist, zum Zweck des Messens des Flusses in dem Gülleraum (12a, 12b).

5. System (2) nach Anspruch 4, wobei die zentrale Steuerung (16) konfiguriert ist, um den mindestens einen Auslass (10a, 10b) von dem geschlossenen Zustand in den offenen Zustand zu ändern, mindestens teilweise auf der Basis der Messung des Flusses in dem Gülleraum (12a, 12b).

6. System (2) nach einem der vorstehenden Ansprüche, wobei das Überwachungssystem einen Güllemesser (24a, 24b) zum Messen einer Differenz in dem Niveau von Gülle, das in dem Gülleraum (12a, 12b) bereitgestellt ist, umfasst, wobei die zentrale Steuerung (16) vorzugsweise konfiguriert ist, um mindestens teilweise auf der Basis des gemessenen Höhenniveaus der Gülle eine Menge an Flüssigkeit (5), die zugegeben werden soll, zu berechnen.

7. System (2) nach einem der vorstehenden Ansprüche, ferner umfassend einen Ammoniaksensor (26), der nahe bei oder in dem Gülleraum (12a, 12b) angeordnet ist, zum Zweck des Messens der Menge an Ammoniak.

8. System (2) nach einem der vorstehenden Ansprüche, wobei die Leitung (6) eine Verteilungsbox (8) umfasst, von der sich eine Vielzahl von Unterleitungen (9a, 9b) erstrecken, wobei jede der Unterleitungen (9a, 9b) mit einem Auslass (10a, 10b) zum selektiven Zugeben der Flüssigkeit (5) versehen ist, und/oder wobei eine Pumpe (7), die zwischen dem Tank (4) und dem Auslass (10a, 10b) verbunden ist, angeordnet ist, und/oder wobei die zentrale Steuerung (16) mit einem Sicherheitssystem versehen ist, wobei das Sicherheitssystem ein Einbruchssignal an den Server (30) im Falle eines unbefugten Zugriffs auf die zentrale Steuerung (16) sendet, und/oder ferner umfassend einen Systemserver (30), der mit einer Serversteuerung und einem Speicher versehen ist, wobei die Steuerung des Servers (30) konfiguriert ist, um Zugabeinformationen von der zentralen Steuerung (16) und/oder dem Server zu empfangen und um die Zugabeinformationen in dem Speicher des Systemservers (30) zu speichern.

9. Tierunterkunft (3), die mit einem System (2) nach einem der vorstehenden Ansprüche versehen ist.

10. Verfahren zum Verringern der Ammoniakbildung, bestehend aus:
- Bereitstellen eines Systems (2) nach einem der Ansprüche 1 bis 8;
- Ändern des Auslasses (10a, 10b) von dem geschlossenen Zustand in den offenen Zustand mittels der zentralen Steuerung (16); und
- Zugeben der Flüssigkeit (5), umfassend Magnesiumsalz, zu dem Gülleraum (12a, 12b); und
- Überwachen von Zugabeinformationen der Flüssigkeit (5).

11. Verfahren nach Anspruch 10, wobei das Magnesiumsalz Magnesiumchlorid umfasst.

12. Verfahren nach Anspruch 10 oder 11, ferner bestehend aus:
- Messen einer Menge an zugegebener Flüssigkeit (5);
- Lagern der Menge an zugegebener Flüssigkeit (5) in der zentralen Steuerung (16) und/oder dem entfernt befindlichen Server (30), vorzugsweise ferner bestehend aus:
- Aufzeichnen einer Zeit einer Zugabe der Menge an zugegebener Flüssigkeit (5), und/oder wobei das Verfahren ferner besteht aus:
- einem Inhaltsmessgerät (28), das eine Messung durchführt;
- Berechnen einer Menge an Flüssigkeit (5), die in dem Tank (4) gelagert ist, auf der Basis der Messung durch das Inhaltsmessgerät (28); und
- der zentralen Steuerung (16) und/oder dem Server (30), die/der Flüssigkeit (5) bestellt, wenn bestimmt wird, dass die Menge an Flüssigkeit (5), die in dem Tank (4) gelagert wird, unter einem Schwellenwert liegt.

## Revendications

1. Système (2) permettant de réduire la formation d'ammoniac dans un espace à lisier (12a, 12b), comprenant :
- un réservoir (4) permettant de stocker un liquide (5) comprenant un sel de magnésium ;
- un conduit (6) raccordé au réservoir (4) et pourvu d'au moins une sortie (10a, 10b) permettant d'ajouter sélectivement le liquide (5) à l'espace à lisier (12a, 12b) ;
- un dispositif de commande central (16) connecté fonctionnellement au conduit (6) et/ou à au moins une sortie (10a, 10b), dans lequel le dispositif de commande central (16) est configuré pour changer l'au moins une sortie (10a, 10b) d'un état fermé à un état ouvert et inversement, dans lequel dans l'état ouvert, du liquide (5) peut être ajouté à l'espace à lisier (12a, 12b) à partir de l'au moins une sortie (10a, 10b) ; et
- un système de surveillance connecté fonctionnellement au dispositif de commande central (16) dans le but de surveiller des informations d'ajout du liquide (5),
dans lequel le dispositif de commande central (16) comprend un module de communication (17) qui peut être connecté à un serveur (30) localisé à distance et est configuré pour envoyer les informations d'ajout au serveur (30), dans lequel le système de surveillance comprend une jauge de contenu (28) agencée dans le réservoir (4) dans le but de mesurer une quantité de liquide (5) présent dans le réservoir (4), dans lequel le dispositif de commande central (16) est configuré pour :
- commander la jauge de contenu (28) pour mettre en œuvre une mesure à un intervalle prédéterminé ;
- calculer une quantité de liquide (5) localisée dans le réservoir (4) en fonction de la mesure par la jauge de contenu (28) ; et
envoyer un signal d'approvisionnement au serveur (30) si la quantité de liquide (5) dans le réservoir (4) est inférieure à une valeur seuil.

2. Système (2) selon la revendication 1, dans lequel le sel de magnésium comprend du chlorure de magnésium.

3. Système (2) selon la revendication 1 ou 2, dans lequel le système de surveillance comprend un débitmètre (11a, 11b) agencé en amont de la sortie (10a, 10b) dans le but de mesurer un liquide (5) s'écoulant par l'au moins une sortie (10a, 10b).

4. Système (2) selon l'une quelconque des revendications qui précèdent, dans lequel le système de surveillance comprend un capteur d'écoulement (22) agencé près d'une ouverture de mélangeur de l'espace à lisier (12a, 12b) dans le but de mesurer un écoulement dans l'espace à lisier (12a, 12b).

5. Système (2) selon la revendication 4, dans lequel le dispositif de commande central (16) est configuré pour changer l'au moins une sortie (10a, 10b) de l'état fermé à l'état ouvert, au moins partiellement en fonction de la mesure d'écoulement dans l'espace à lisier (12a, 12b).

6. Système (2) selon l'une quelconque des revendications qui précèdent, dans lequel le système de surveillance comprend une jauge à lisier (24a, 24b) permettant de mesurer une différence de niveau de lisier fourni dans l'espace à lisier (12a, 12b), dans lequel le dispositif de commande central (16) est de préférence configuré pour calculer, au moins partiellement en fonction du niveau en hauteur mesuré du lisier, une quantité de liquide (5) à ajouter.

7. Système (2) selon l'une quelconque des revendications qui précèdent, comprenant en outre un capteur d'ammoniac (26) agencé près de, ou dans, l'espace à lisier (12a, 12b) dans le but de mesurer la quantité d'ammoniac.

8. Système (2) selon l'une quelconque des revendications qui précèdent, dans lequel le conduit (6) comprend un boîtier de distribution (8) à partir duquel une pluralité de sous-conduits (9a, 9b) s'étendent, dans lequel chacun des sous-conduits (9a, 9b) est pourvue d'une sortie (10a, 10b) permettant d'ajouter sélectivement le liquide (5), et/ou dans lequel une pompe (7) raccordée entre le réservoir (4) et la sortie (10a, 10b) est agencée, et/ou dans lequel le dispositif de commande central (16) est pourvu d'un système de sécurité, dans lequel le système de sécurité envoie un signal d'intrusion au serveur (30) en cas d'accès non autorisé au dispositif de commande central (16), et/ou comprenant en outre un serveur système (30) pourvu d'un dispositif de commande de serveur et d'une mémoire, dans lequel le dispositif de commande du serveur (30) est configuré pour recevoir des informations d'ajout provenant du dispositif de commande central (16) et/ou du serveur, et pour stocker les informations d'ajout dans la mémoire du serveur système (30).

9. Hébergement d'animaux (3) pourvu d'un système (2) selon l'une quelconque des revendications qui précèdent.

10. Procédé permettant de réduire la formation d'ammoniac, comprenant :
- la fourniture d'un système (2) selon l'une quelconque des revendications 1 à 8 ;
- le changement de la sortie (10a, 10b) de l'état fermé à l'état ouvert au moyen du dispositif de commande central (16) ; et
- l'ajout du liquide (5) comprenant un sel de magnésium à l'espace à lisier (12a, 12b) ; et
- la surveillance d'informations d'ajout du liquide (5).

11. Procédé selon la revendication 10, dans lequel le sel de magnésium comprend du chlorure de magnésium.

12. Procédé selon la revendication 10 ou 11, comprenant en outre :
- la mesure d'une quantité de liquide ajouté (5) ;
- le stockage de la quantité de liquide ajouté (5) dans le dispositif de commande central (16) et/ou un serveur (30) localisé à distance, de préférence comprenant en outre :
- l'enregistrement d'un temps d'ajout de la quantité de liquide ajouté (5), et/ou dans lequel le procédé comprend en outre :
- une jauge de contenu (28) mettant en œuvre une mesure ;
- le calcul d'une quantité de liquide (5) stockée dans le réservoir (4) en fonction de la mesure par la jauge de contenu (28) ; et
- le dispositif de commande central (16) et/ou le serveur (30) demandant du liquide (5) lorsqu'il est déterminé que la quantité de liquide (5) stockée dans le réservoir (4) est inférieure à une valeur seuil.
